# EUROPEAN PATENT SPECIFICATION

(11) **EP 2 142 291 B1**
(45) Date of publication and mention of the grant of the patent: **07.05.2014**
(21) Application number: 07846862.6
(22) Date of filing: 28.11.2007
(51) Int. Cl.: B01F 7/00, B01F 7/16, C02F 1/50

(54) **METHOD FOR TREATING BALLAST WATER WITH AQUEOUS ACROLEIN SOLUTION**
VERFAHREN ZUR BEHANDLUNG VON BALLASTWASSER MIT WÄSSRIGER ACROLEINLÖSUNG
PROCEDE DE TRAITEMENT DE L'EAU DE BALLAST PAR UNE SOLUTION AQUEUSE D'ACROLÉINE

(30) Priority: 03.04.2007 DE 202007004912 U
(43) Date of publication of application: 13.01.2010
(60) Divisional application: 10012428.8
(73) Proprietor: Blum, Holger, 9053 Teufen AR (CH)
(72) Inventor: Blum, Holger, 9053 Teufen AR (CH)
(74) Representative: Kirschner, Klaus Dieter
(86) International application number: PCT/EP2007/010334
(87) International publication number: WO 2008/119371

(56) References cited:
- EP-A2- 1 006 084
- GB-A- 941 926
- GB-A- 2 146 343
- JP-A- 2002 361 059
- US-A- 3 111 954
- US-A- 4 833 897
- US-A- 5 723 498
- US-A1- 2004 129 645

## Description

It is already known, that ballast water on ships can be disinfected by using acrolein.

The document "Ballast Water Treatment R & D Directory", 2nd addition, November 2004, issued by the International Marine Organisation, London, describes on page 61 how the transfer of bacteria, algae, zebra-mussels and other organisms of the zooplankton from one marine port to another, can surely be suppressed by means of adding 1 to 15 ppm acrolein to the ballast water.

The advantage of adding acrolein is the sustained effect particularly against larvae of zebra-mussels and the fact that the acrolein disintegrates by themselves after some days which means that no new burdening of the marine port basin by this biocides is encountered upon discharging the ballast water in the port of destination.

On the one hand, the above advantages have been proven, but, on the other hand, there is the problem that handling, transportation and the storing of pure acrolein on ships can not be carried out because acrolein is a highly poisonous liquid with a tear gas effect, and the crew of the ship would be forced to carry out the handling of this biocide only after being protected completely by "NBC" (NBC = nuclear, biological and chemical) protective clothing and while using gas masks.

The aqueous solution of acrolein is not poisonous and can be safely handled. However, this solution is stable for only a few days so that the use of on ships is impossible because of logistic problems.

There have been many attempts to overcome the above mentioned difficulties thereby that a less dangerous derivative of acrolein is used in state of acrolein.

US-A-5,183,944 proposes to decompose, instead of acrolein, a non poisonous aqueous acrolein acetal at the location of usage with an aqueous acid solution, and, thereafter, to remove the acrolein formed from the acetal, from the reaction mixture by means of an inert gas stream. The acrolein containing inert gas flow then serves for the treatment of the water. In order to use this method on board of a ship, absolutely reliable, double walled conduits have to be installed for the highly poisonous acrolein-gas-mixture.

Upon introducing the acrolein containing gases into the ballast water tanks, the inert gas is discharged from the ventilation conduits of the ballast water tank, and it still contains such an amount of residual acrolein that working on deck is impossible because of the tear gas effect and that a dangerous operation condition is encountered. Furthermore, a water containing residual product is generated in the method according to US-A-5,183,944 which product can be disposed of an board of a ship only with difficulties.

US-A-5,560,833 proposes the use of an alcoholic solution of acrolein acetal and acid cleavage for forming an acrolein solution at the location of usage. Acrolein acetal dissolved in isopropyl alcohol and a diluted 10%-mineral acid are mixed under pressure in a pipe coil to form a homogenous reaction solution. Thereafter, the mixture is passed slowly through a storage tank in a laminar flow until the deacetalation of the acrolein acetal is completely finished.

In another embodiment of the patent US-A-5,560,833 a circulation mixer in form of a pipe without high interior turbulence and with a slowly moving multiple stirring unit is used as a storage tank instead of the storage tank itself. The pipe coil for mixing the alcoholic acetal solution and the diluted mineral acid is arranged, in this example, as an interior installation coaxially with respect to the tube shaped stirring mixer.

It is a precondition for carrying out this method for producing acrolein on board of a ship that a pre-mixture of isopropyl alcohol and acetal as well as a pre-mixture out of concentrated mineral acid and water have to be produced on site. According to the patent teaching of the US-A-5,560,833, these two pre-mixtures have to be transferred each to a pressure container in order to be ready for use.

For both operations, there is no trained personal on board of a sea ship. Additionally, there is a fire hazard in handling easily volatile, inflammable C1 to C3-alcohols without protective gas. It has been found by working the method of US-A-5,560,833, that the proposed devices had only a short life time and became unusable thereafter when they did not consist out of glass but out of acid resistant high-grade steel as is usual.

After a short operation time period of the device according to US-A-5,560,833 resin like coating out of bisacrolein and other condensation products of the acrolein on the walls of the storage tanks out of high-grade steel and on the tube shaped stirring mixers which came into contact with the liquid. This disadvantageous effect occurred in particular at locations with laminar flow and only low turbulence.

Because of the above mentioned deficiencies, the above proposed devices according to US-A-5,183,944 and US-A-5,560,833 can not be used for treating of ballast water with acrolein on board of ships.

In US 2004/0129645, apparatuses and methods of a ballast water treatment system are disclosed. The ballast water treatment system includes a control system and a ballast tank system. The control system controls the concentration of a biocide in the ballast tank system. In addition, the ballast water treatment system can be implemented in a vessel. The ballast water treatment system includes a control system, a biocide generation system, and a ballast tank system. The control system is capable of controlling the concentration of a biocide in the ballast tank system by controlling the amount of the biocide feed into the ballast tank system from the biocide generation system. Further, the ballast water treatment system involves methods for controlling organisms in ballast water of a vessel. A representative method includes providing the ballast water, and treating the ballast water with chlorine dioxide.

US 5,723,498 A discloses a composition which is capable of releasing acrolein and is easy to handle contains (i) an acetal of acrolein with a C1-6 alcohol with 1 to 4 hydroxyl groups and (ii) an acid soluble therein and chemically compatible with a pKs value of less than 4 and (iii) is anhydrous. A preferred composition contains 2-vinyl-1,3-dioxolane as acetal, anhydrous oxalic acid, fumaric acid or maleic acid or a mixture of mono- and di(C1- to C3-)alkyl phosphate as acid and, in addition, a non-ionic surfactant. The acrolein is released at the site of use upon contact with for example water for the purpose of combatting microbial, vegetable and animal pests.

EP 1 006 084 A refers to an agent contains an aqueous percarboxylic acid with 1 to 6 carbon atoms as peroxygen compound, to which ballast is added water in an amount corresponding to 0.1 to 200 mg percarboxylic acid per liter. Process for avoiding contamination of navigatable body of water with organisms selected from plankton, e.g. epifauna and photo plankton including cystenes, comprises adding reagent containing peroxygen compound to the ballast water, allowing the reagent to react until the organisms are destroyed and feeding the treated water back into the body of water.

It is the object of the invention to provide a method with which ballast water can be treated with acrolein on board of ships and the operation of which method is ensured also after long operational time periods without dangerous operation states being encountered and/or pre-mixtures having to be produced.

For achieving this object, the method for treating of ballast water with aqueous acrolein solution has the features of claim 1. In spite of this simple construction, an extremely reliable and trouble-free treatment of ballast water with a diluted aqueous solution of acrolein is achieved in an advantageous way. Preferred embodiments of the invention are characterized in the sub-claims.

A further advantage resides in that pure acrolein is not present at any location within the device which means additional security against occurrence of dangerous operation states. A safe operation of the method is also ensured upon varying or interrupted supply of ballast water. Since the non-circular reaction container in which the deacetalation takes place, is always completely filled, the trouble-free function of the device is also not adversely affected also in the case of heavy sea condition.

The eccentric arrangement of the intensive stirring unit has the result that no thrombus shaped stirring forms are formed in the non-circular reaction container also in the case of high input of stirring energy, and that, thereby, one of the main reasons for the occurrence of resin like coatings of the metallic walls of the device is removed.

The method of the invention for treating ballast water with acrolein provides a surprising number of important technical advantageous. Acrolein acetal can be directly used with the device of the invention without a pre-mixture with a solvent being necessary. The same is true for the acid which is used as a catalyst which acid can be dosed into the device as supplied and without prior dilution with water. It is particularly advantageous with the method according to the invention that the already available on-board water supply system can be used for supplying the water for the hydrolysis whereby additional dosage pumps and control devices become unnecessary. In particular, the supply of water with a fixed supply rate irrespective of the operational state thereof is an additional security measure against un-thoughtful operation or in case of break down of the current supply.

In the method of the invention for treating ballast water with acrolein, a single control valve in the connecting conduit between the non-circular reaction container and the negative pressure zone of the water jet pump controls the supply of aqueous acrolein solution. As the control valve is a security valve it is ensured that the acrolein solution flows to the negative pressure zone only in case the pressure rising pump is working.

According to an advantageous embodiment of the invention, the supply ports for acrolein acetal and catalyst acid are pipe portions which are welded to the cover of the box. On the two pipe portions, check valves are mounted which prevent aqueous acrolein solution from passing out of the box into the supply lines for acrolein acetal and for catalyst acid.

According to an advantageous embodiment of the invention, the supply port for supplying the hydrolysis water into the box is a circular gap between the stirrer shaft and the opening for the stirrer shaft in the cover of the box. The hydrolysis water gets to the ring gap through a tube portion at the sealing hub of the stirrer shaft and forms, thereby, an inhibiting water flow against discharge of aqueous acrolein solution out of the box.

According to an advantageous embodiment of the invention, the box comprises an outer cooling jacket having supply and discharge ports for cooling water such that the reaction solution within the box may be maintained at a temperature of below 35° Celsius.

According to an advantageous embodiment of the invention, the intensive stirrer is driven by an electric motor the rotational speed of which is adapted to be adjusted by means of a frequency converter.

According to an advantageous embodiment of the invention, there is an electric or pneumatic control unit which interrupts the supply of acrolein acetal and catalyst acid to the box in case the pressure in the negative pressure zone of the water jet pump exceeds a predetermined value.

According to an advantageous embodiment of the invention, there is an electric or pneumatic control unit which interrupts the supply of acrolein acetal and catalyst acid to the box in case the supply of hydrolysis water is interrupted.

According to an advantageous embodiment of the invention, there is an electric or pneumatic control unit which interrupts the supply of acrolein acetal and catalyst acid to the box in case the drive motor of the stirrer shaft is at rest.

According to an advantageous embodiment of the invention, an electric motor controlled by a frequency converter serves as a driving means for the pressure rising pump whereby an effective control of the input pressure in the water jet pump is achieved and the control of the device of the invention can be carried out by analog or digital computer systems in a simple way.

According to an advantageous embodiment of the invention, a control unit controls the rotational speed of the pressure rising pump depending on the process parameters of the device for treating of ballast water with acrolein.

According to an advantageous embodiment of the invention, the process parameter is the pressure difference between the supply to and the discharge from the water jet pump.

According to an advantageous embodiment of the invention, the control unit on the basis of the pressure difference comprises at least two pressure sensors and a measurement converter which are to determine the pressure difference from the measurement values from the pressure sensors, to conduct a comparison between nominal value and actual value and to output a resulting control signal to the rotational speed control of the motor.

Embodiments of the invention are now described with reference to the attached drawings in which:
Fig. 1 schematically shows the non-circular reaction container in the shape of a closed box which the intensive stirrer eccentrically arranged therein;
Fig. 2 schematically shows the respective flow scheme of the device for treating of ballast water with acrolein by the method of the invention; and
Fig. 3 schematically shows the supply of hydrolysis water into the box.

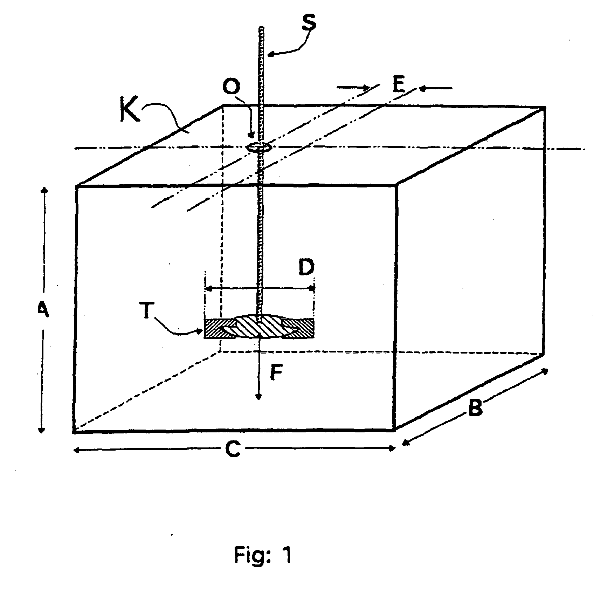

As can be seen from Figure 1, the non-circular reaction container has the shape of a closed box K. The box K has a height A, a breadth Band a length C and includes no stationary interior installations. The intensive stirring element T is fixedly connected to the stirrer shaft S. The stirrer shaft S extends through the opening 0 in the cover of the box. The stirrer shaft S and, thereby, the stirring element T is arranged eccentrically by a distance E from half of the box length C. The stirring element has the diameter D and is positioned at a distance F from the bottom of the box. As an alternative, not shown, several intensive stirring elements may be arranged in the interior of the box (K).

The rotating speed of the stirring element T is variable such that a mechanical stirring power of at least 500 Watt per cubic meter of the volume of the box can be generated. The box K is filled completely with reaction liquid, it does not contain any thrombus shaped form of liquid because of the high turbulence, and no resin formation occurs from the aqueous acrolein produced because there are no stationary interior installations.

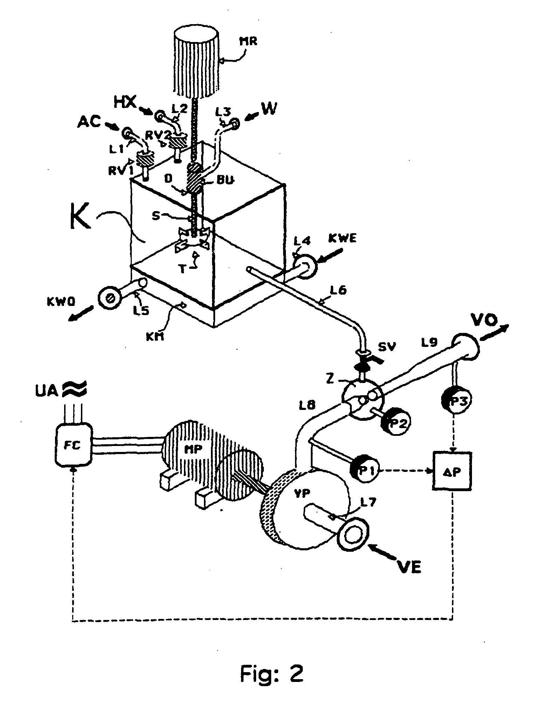

Details of the device for carrying out the method of the invention can be taken from Figure 2. As can be seen from Figure 2, the flow VE (volume/unit time) of the ballast water to be treated with acrolein, flows through the conduit L7 into the intake pipe of the pressure rising pump VP. The ballast water flows through the pressure conduit L8 into the water jet pump Z and is mixed with the aqueous acrolein solution being sucked into the negative pressure zone through the control valve SV. The ballast water treated with the acrolein is discharged through the conduit L9 as a stream VO (volume/unit time).

The rotational speed of the pressure rising pump VP is variable. For example, the drive motor MP may be a three-phase motor the rotational speed of which is controlled by a frequency converter FC. This frequency converter is connected to the mains cable AC and obtains its control signal as a signal current, for example 4 - 20 mA (or as a signal voltage 0 to 5 Volt from the controller designated by ΔP in Figure 2, and from a measurement converter.

The control unit ΔP is connected with two pressure sensors P1 and P3. The measurement converter of the control unit ΔP calculates the differential pressure from the input signals of the pressure sensors P1 and P3 and compares this differential pressure with an predetermined nominal value. The deviation between nominal value and actual value is fed to the frequency converter FC as a control signal. By means of this control circuit, it is ensured that the pressure P2 in the negative pressure zone of the water jet pump Z does not exceed a minimal value also in the case of a varying supply of ballast water, and that the supply of aqueous acrolein solution to the ballast water is affected continuously and without disturbance.

As can be seen from Figure 2, the negative pressure zone of the water jet pump Z is hydraulically connected to the drainage conduit L6 welded to the box K, by means of the control valve SV. The reaction liquid from the box K flows to the conduit L6 into the water jet pump because of the pressure difference between the low over pressure in the interior of the box K and the negative pressure P2 in the negative pressure zone of the water jet pump Z.

Because of this advantageous arrangement of the method of the invention, a separate feeder pump for the diluted aqueous acrolein solution is not necessary whereby the operational security of the method is significantly enhanced.

The box K comprises an outer cooling jacket KM having a supply pipe portion L4 for coolant stream KWE and a coolant discharge pipe portion L5 for the discharged coolant stream KWO. Water or another usual coolant can serve as a coolant means.

As can be seen, the box K does not comprise any stationary interior installations but only the stirring unit eccentrically arranged with respect to the longitudinal axis of the box, the stirring unit consisting out of the stirring element T which is shown as stirring turbine, and the stirrer shaft S which is connected to the drive motor MR.

The opening for the stirrer shaft S in the upper cover of the box is designated by O and has a somewhat larger opening diameter than the stirrer shaft itself. The stirrer shaft is axially centrally adjusted with respect to the opening of O. The hydrolysis water W, which is necessary for the hydrolysis of the acrolein acetat, flows through the ring gap between the opening 0 and the shaft S. The sealing hub BU which is internally hollow, is screwed onto the cover of the box in liquid-tight relationship. At its upper end, the hub BU is sealed with respect to the stirrer shaft S by means of a packing case or a phase seal to avoid leakage of water or reaction liquid out of the box K.

The supply conduit L3 for the continuously supplied hydrolysis water W is screwed to the sealing hub BU.

By means of this advantageous embodiment of the invention, the hydrolysis water W simultaneously also serves as a blocking water for mechanical sealing of the stirrer shaft S with respect to the box K.

As can be seen, the cover of the box comprises two further supply ports which are arranged as far as possible away from the discharge conduit L6. The supply conduit L2 supplies continuously the acid HX which is necessary for cleaving the acrolein acetal to the box K. The supply conduit L1 supplies continuously acrolein acetal to the box K. In order to prohibit liquid to get from the box K into the supply conduits L1 and L2, those conduits are provided with check valves RV1 and RV2.

In practise, the pressure in the supply line L3 for hydrolysis water W will amount to some bars, and, therefore, a check valve is not necessary in this supply line.

When starting the method of the invention and during the treatment of the ballast water with aqueous acrolein solution, the supply amount per unit time of the hydrolysis water is fixedly adjusted. Thereby, it is assured that the box K and the conduit L6 are completely filled with water at the beginning. Thereafter, the stirring unit MR is started. As soon as the pressure rising pump VP is controlled to its nominal operation and the negative pressure P2 has reached the prescribed value, the continuous supply of acid HX to the supply line L2 to the box K is started. An acid as stated in US-A-5,183,944 may be used as an acid for the deacetalation. Several minutes after the beginning of the acid supply, the supply pump for the acrolein acetal AC is started, and the acrolein acetal is pumped through supply line L1 into the box K.

After the treatment of the ballast water has been finished, the supply streams for acrolein acetal AC acid hydrolysis water HX and W are switched off in the opposite sequence whereby it is insured that the box K is again filled only with water at the end.

In case a disturbance should occur during the treatment of the ballast water, for example by breakdown of the pump VP and in case, as a result thereof, the negative pressure P2 exceeds the prescribed value, the supply streams of acrolein acetal AC and acid HX to the box K are switched off by means of a security circuit (not shown).

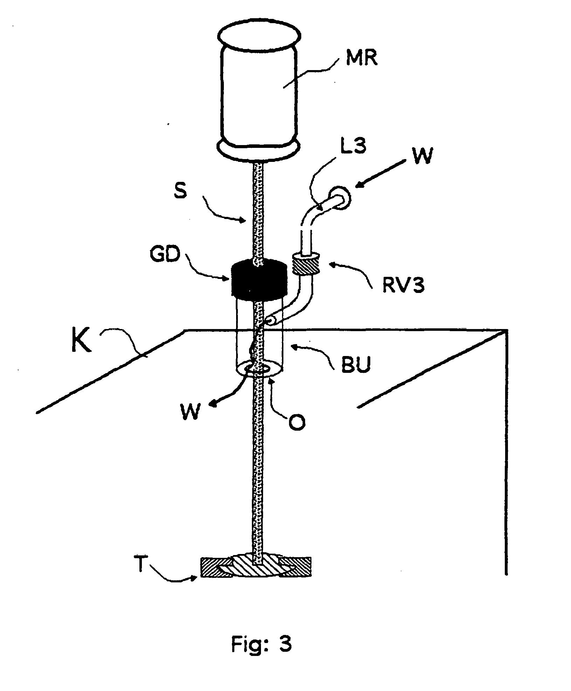

Details of the shut-off water circuit and of the supply of the hydrolysis water W into the box K of can be taken from Figure 3.

As can be seen from this drawing, the hub BU which is sealed to the box K, is formed as a hollow cylinder. A mechanical seal GD to the stirrer shaft S is arranged at the upper end of the hub BU. The seal GD may be a packing case having packing rings or, advantageously, a phase seal.

The hub BU comprises a screw threaded opening or a flange socket to which the supply line L3 for the hydrolysis water W is fluid-tightly attached.

The hydrolysis water W is introduced under pressure through the pipe line L3 and through the check valve RV3 into the hub BU from the side, flows around the stirrer shaft in the direction of the ring gap which is formed by the opening O in the cover of the box and the stirrer shaft axially centrally arranged in the opening O, downwards and which is the interior of the box K.

By means of the forced flow conditions in the ring gap, reaction solution can not get from the interior of the box K into the interior of the hub BU.

In case the sealing GD should fail, water W but no reaction solution will exit the box K.

## Claims

1. Method for treating of ballast water with aqueous acrolein solution using acrolien acetal (AC), deacetalation acid (HX) and hydrolysis water (W) which are mixed and brought to a reaction in a reaction container,
**characterized in that**
the acrolein acetal (AC), the deacetalation acid (HX) and the hydrolysis water (W) are supplied to the reaction container by separate supply ports at the outside of the reaction container (K) for generating an aqueous acrolein solution and are stirred by an intensive stirring unit (T); that the ballast water is pumped by means of a pressure rising pump (VP) through a water jet pump (Z) having a negative pressure zone; that
a closed reaction container (K) in form of a closed box is completely filed with reaction liquid and contains the eccentrically arranged intensive stirring unit (T); and that
the diluted aqueous acrolein solution generated in the reaction container (K), is hydraulically drained through a drainage line (L6) which contains a control valve and is hydraulically connected between the reaction container (K) and the negative pressure zone of the water jet pump (Z), to the negative pressure zone of the water jet pump (Z).

2. Method according to claim 1, **characterized in that** as the intensive stirring element (T) a turbine stirrer having a stirrer shaft (S) is used.

3. Method according to claim 1, **characterized in that** the stirring power mechanically input into the box is larger than 0,5 k Watt per cubic meter box volume.

4. Method according to claim 1, **characterized in that** the hydrolysis water is supplied through a supply opening in form of a ring gap between the stirrer shaft (S) and the opening (O) for the stirrer shaft (S) in a cover of the container (K).

5. Method according to claim 1, **characterized in that** the container (K) comprises an outer cooling jacket (KM).

6. Method according to claim 1, **characterized in that** several intensive stirring elements are arranged in the interior of the container (K).

7. Method according to claim 1, **characterized in that** an electric motor (MP) controlled by means of a frequency converter (FC), serves as a drive for the pressure rising pump (VP).

8. Method according to claim 7, **characterized in that** the supply of acrolein acetal and catalyst acid to the container is interrupted by an electric or pneumatic control in case
the pressure in the negative pressure zone of the water jet pump exceeds a predetermined value, or
in case the supply of hydrolysis water is interrupted or
in case the drive motor of the stirrer shaft is at rest..

9. Method according to claim 7, **characterized by** a control unit (ΔP) configured to carry out a comparison of the nominal value to the actual value by measuring the pressure difference of the ballast water upon discharge from the pressure rising pump (PI) and upon discharge from the device (P3), and to output a resulting control signal to the frequency converter (FC) of the pressure rising pump (VP).

## Patentansprüche

1. Verfahren zur Behandlung von Ballastwasser mit wässriger Acroleinlösung unter Verwendung von Acroleinacetal (AC), Deacetalisierungssäure (HX) und Hydrolysewasser (W), die gemischt und in einem Reaktionsbehälter in Reaktion gebracht werden,
**dadurch gekennzeichnet, dass**
das Acroleinacetal (AC), die Deacetalisierungssäure (HX) und Hydrolysewasser (W) dem Reaktionsbehälter durch separate Zufuhreinlässe an der Außenseite des Reaktionsbehälters (K) zugeführt werden, um eine wässrige Acroleinlösung zu erzeugen, und durch eine Intensiv-Rühreinheit (T) gerührt werden; dass
das Ballastwasser mit Hilfe einer Druckerhöhungspumpe (VP) durch eine Wasserstrahlpumpe (Z) gepumpt wird, die eine negative Druckzone hat; dass
ein geschlossener Reaktionsbehälter (K) in Form eines geschlossenen Kastens vollständig mit Reaktionsflüssigkeit gefüllt wird und eine exzentrisch angeordnete Intensiv-Rühreinheit (T) enthält; und dass
die verdünnte wässrige Acroleinlösung, die in dem Reaktionsbehälter (K) erzeugt wurde, hydraulisch durch eine Ableitungsleitung (L6) abgeleitet wird, die ein Steuerventil enthält und hydraulisch zwischen dem Reaktionsbehälter (K) und der negativen Druckzone der Wasserstrahlpumpe (Z) angeordnet ist, an der negativen Druckzone der Wasserstrahlpumpe (Z).

2. Verfahren nach Anspruch 1, **dadurch gekennzeichnet, dass** als Intensiv-Rühreinheit (T) ein Turbinenrührer mit einem Rührerschaft (S) verwendet wird.

3. Verfahren nach Anspruch, **dadurch gekennzeichnet, dass** die Rührleistung, die mechanisch in den Kasten eingebracht wird, größer ist als 0,5 k Watt pro Kubikmeter Kastenvolumen.

4. Verfahren nach Anspruch 1, **dadurch gekennzeichnet, dass** das Hydrolyswasser durch eine Zufuhröffnung in Form eines Ringspaltes zwischen dem Rührerschaft (S) und der Öffnung (O) für den Rührerschaft (S) in einem Deckel des Behälters (K) zugeführt wird.

5. Verfahren nach Anspruch 1, **dadurch gekennzeichnet, dass** der Behälter (K) eine äußere Kühlummantelung (KM) hat.

6. Verfahren nach Anspruch 1, **dadurch gekennzeichnet, dass** mehrere Intensiv-Rührelemente im Innern des Behälters (K) angeordnet sind.

7. Verfahren nach Anspruch 1, **dadurch gekennzeichnet, dass** ein Elektromotor (MP), der durch einen Frequenzumsetzer (FC) gesteuert wird, als Antrieb für die Druckerhöhungspumpe (VP) dient.

8. Verfahren nach Anspruch 7, **dadurch gekennzeichnet, dass** die Zufuhr von Acroleinacetal und Katalysatorsäure zu dem Behälter durch eine elektrische oder pneumatische Steuerung unterbrochen wird, wenn der Druck in der negativen Druckzone der Wasserstrahlpumpe einen vorgegebenen Wert übersteigt, oder wenn die Zufuhr von Hydrolysewasser unterbrochen wird, oder wenn der Antriebsmotor des Rührerschafts in Ruhe ist.

9. Verfahren nach Anspruch 7, **gekennzeichnet durch** eine Steuereinheit (ΔP), die konfiguriert ist, um einen Vergleich des nominalen Wertes zu dem aktuellen Wert durchzuführen, indem die Druckdifferenz des Ballastwassers beim Austritt aus der Druckerhöhungspumpe (PI) und beim Austritt aus der Vorrichtung (P3) gemessen wird, und um ein resultierendes Steuersignal an den Frequenzumsetzer (FC) der Druckerhöhungspumpe (VP) auszugeben.

## Revendications

1. Procédé de traitement de l'eau de ballast avec une solution aqueuse d'acroléine en utilisant l'acétal d'acroléine (AC), l'acide de désacétalisation (HX) et l'eau d'hydrolyse (W) qui sont mélangés et amenés à une réaction dans un récipient de réaction,
**caractérisé en ce que**
- l'acétal d'acroléine (AC), l'acide de désacétalisation (HX) et l'eau d'hydrolyse (W) sont fournis au récipient de réaction par les orifices d'alimentation distinctes situées à l'extérieur du récipient de réaction (K) pour générer une solution aqueuse d'acroléine et sont agités par une unité d'agitation intensive (T); que l'eau de ballast est pompée au moyen d'une pompe d'accroissement de pression (VP) par une pompe à jet d'eau (Z) ayant une zone de pression négative; qu'
- un récipient de réaction fermé (K) dans la forme d'une boîte fermée est entièrement rempli avec le liquide de réaction et comprend l'unité d'agitation intensive arrangée de manière excentrique (T); et que
la solution aqueuse d'acroléine diluée générée dans le récipient de réaction (K) est drainée par moyens hydrauliques par une ligne de drainage (L6) qui comprend une valve de commande et connectée par moyens hydrauliques entre le récipient de réaction (K) et la zone de pression négative de la pompe à jet d'eau (Z), à la zone de pression négative de la pompe à jet d'eau (Z).

2. Procédé selon la revendication 1, **caractérisé en ce qu'**on utilise comme élément d'agitation intensif (T) un agitateur à turbine ayant un arbre de l'agitateur (S).

3. Procédé selon la revendication 1, **caractérisé en ce que** la puissance d'agitation introduite par moyen mécanique dans la boîte est plus large que 0,5 kWatts par mètre cube volume de boîte.

4. Procédé selon la revendication 1, **caractérisé en ce que** l'eau d'hydrolyse est fournie par une ouverture d'alimentation dans la forme d'un espace annulaire entre l'arbre d'agitateur (S) et l'ouverture (0) pour l'arbre d'agitateur (S) dans un couvercle du récipient (K).

5. Procédé selon la revendication 1, **caractérisé en ce que** le récipient (K) comprend une chemise de refroidissement extérieure (KM).

6. Procédé selon la revendication 1, **caractérisé en ce que** plusieurs éléments d'agitation intense sont arrangés dans l'intérieur du récipient (K).

7. Procédé selon la revendication 1, **caractérisé en ce qu'**un moteur électrique (MP) commandé par moyen d'un convertisseur de fréquences (FC), sert d'entraînement pour la pompe d'accroissement de pression (VP).

8. Procédé selon la revendication 7, **caractérisé en ce que** l'alimentation d'acétal d'acroléine et d'acide catalyseur au récipient est interrompue par une commande électrique ou pneumatique dans le cas où
- la pression dans la zone de pression négative de la pompe à jet d'eau dépasse une valeur prédéterminée, ou
- dans le cas dans lequel l'alimentation d'eau d'hydrolyse est interrompue ou
- dans le cas dans lequel le moteur d'entraînement de l'arbre d'agitateur est au repos.

9. Procédé selon la revendication 7, **caractérisé par** une unité de commande (ΔP) configuré pour réaliser une comparaison de la valeur nominale avec la valeur réelle en mesurant la différence de pression de l'eau de ballast lors de la décharge de la pompe d'accroissement de pression (VP) et lors de la décharge du dispositif (P3), et pour faire sortir le signal de commande résultant au convertisseur de fréquences (FC) de la pompe d'accroissement de pression (VP).
